(19) **Europäisches Patentamt**
**European Patent Office**
**Office européen des brevets**

(11) **EP 1 648 693 B1**

(12) **EUROPEAN PATENT SPECIFICATION**

(45) Date of publication and mention
of the grant of the patent:
**14.05.2008 Bulletin 2008/20**

(51) Int Cl.:
**B32B 5/26** *(2006.01)* **D04H 1/00** *(2006.01)*
**A47C 27/00** *(2006.01)*

(21) Application number: **04779506.7**

(22) Date of filing: **28.07.2004**

(86) International application number:
**PCT/US2004/024464**

(87) International publication number:
**WO 2005/011975 (10.02.2005 Gazette 2005/06)**

(54) **FIRE RESISTANT FABRIC COMPOSITE, PROCESS FOR FIRE-BLOCKING A MATTRESS SET, AND A MATTRESS AND MATTRESS SET FIRE-BLOCKED THEREBY**

SCHWER ENTFLAMMBARER GEWEBEVERBUND, VERFAHREN ZUM BRANDSCHUTZ EINES MATRATZENSATZES UND DADURCH BRANDGESCHÜTZTE(R) MATRATZE UND MATRATZENSATZ

TISSU COMPOSITE IGNIFUGE, PROCEDE D'IGNIFUGEAGE D'UN ENSEMBLE DE MATELAS, ET MATELAS ET ENSEMBLE DE MATELAS IGNIFUGES PAR UN TEL TISSU COMPOSITE

(84) Designated Contracting States:
**DE FR GB IT NL**

(30) Priority: **29.07.2003 US 630081**

(43) Date of publication of application:
**26.04.2006 Bulletin 2006/17**

(73) Proprietor: **E. I. DU PONT DE NEMOURS AND COMPANY**
**Wilmington,**
**Delaware 19898 (US)**

(72) Inventors:
• **FORSTEN, Herman, Hans**
**Williamsburg, Virginia 23188 (US)**

• **KNOFF, Warren, F.**
**Richmond, Virginia 23220 (US)**
• **YOUNTS, William, E., III**
**Fort Mill, South Carolina 29715 (US)**

(74) Representative: **Heinemann, Monica**
**Abitz & Partner Patentanwälte**
**Postfach 86 01 09**
**81628 München (DE)**

(56) References cited:
**US-A- 5 609 950        US-A1- 2004 024 459**
**US-A1- 2004 060 120**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

## BACKGROUND OF THE INVENTION

### 1. Field of the Invention

This invention relates to a fabric composite for use in fire-blocking a mattress, a fire-blocked mattress set, and a process for fire-blocking mattresses. Such mattress sets have a peak heat release rate of less than 150 kilowatts within 60 minutes and a total heat release of less than 25 megajoules within 10 minutes when tested according to Technical Bulletin 603 of the State of California.

### 2. Description of Related Art

The State of California has led the drive to regulate and reduce the flammability of mattresses and mattress sets in an attempt to reduce the number of lives lost in household, hotel, and institutional fires. In particular, the Bureau of Home Furnishings and Thermal Insulation of the Department of Consumer Affairs of the State of California issued Technical Bulletin 603 "Requirements and Test Procedure for Resistance of a Residential Mattress/Box Spring Set to a Large Open-Flame" to quantify the flammability performance of mattress sets.

Mattresses normally contain a mattress core covered by a cushioning material that is in turn covered with an outer fabric ticking. Most cushioning material is made from foam or fiber materials that will burn when exposed to an open flame. One useful method of fire-blocking foam cushions, particularly airplane seats, is disclosed in United States Patent No. 4,750,443 to Blaustein, et al., wherein three to seven layers of flame resistant fabrics are used underneath the covering fabric of the seat to encase the foam. To the degree required per the aircraft seat flammability test method, these fire-blocked cushions withstand a flame jet impinging on the cushion and prevent the entire cushion from being engulfed by the flame or continuing to burn after the flame jet is removed.

United States Patent Nos. 6,132,476; 6,547,835; and 5,609,950 disclose fabric blends of inherently flame resistant fibers and cellulosic fibers having increased flame resistance; the fabric can contain an additional fire retardant that is added, for example, as an additive in a dyeing step. Because of the low content of inorganic material the flame resistant cellulose fiber disclosed in these references does not retain an adequate percentage of their fiber weight when exposed to high temperatures.

Mattresses are sold by a consumer's initial impression of support and comfort and, therefore, mattresses normally contain, in addition to any supporting foam in the mattress core, cushioning material made from light density fibrous battings or foams, or a combination of both, that provide a surface cushioning effect. This tactile cushioning effect is highly desired by the consumer. The cushioning material is normally stitched and acts like a pillow above the mattress core, providing very tactile cushioning, the type that can be readily discerned by simply touching or running one's hand across the mattress. Attempts to encase all the flammable materials in a mattress with a fire-blocking fabric in a manner similar to that used for airplane seats, that is, by inserting appropriate fire-blocking layers underneath the ticking to encase all the battling and/or the foam, compress and restrain the cushioning material and severely limit the cushioning effect, giving the mattress poor initial tactile aesthetics. In addition, the use of multiple fire-blocking layers can also add stiffness or restrain the give of the mattress core, affecting overall comfort. Therefore, what is needed is a way to fire-block a mattress while retaining excellent initial aesthetics of the mattress, including the tactile aesthetics of the cushioning material.

## SUMMARY OF THE INVENTION

This invention is related to a fabric composite resistant to an open flame comprising, in order, sacrificial outer ticking, sacrificial cushioning material, and fire-blocking fabric, the fire-blocking fabric being a single layer of nonwoven fabric comprising at least 17 grams per square meter (0.5 ounces per square yard) of a char-forming cellulose fiber containing inorganic compounds that retains at least 10 percent of its fiber weight when heated in air to 700°C at a rate of 20 degrees C per minute, and at least 17 grams per square meter (0.5 ounces per square yard) of a heat-resistant fiber selected from the group constisting of para-aramid, polybenzazole, polybenzimidazole, and polyimide. In one embodiment of this invention, the cellulose fiber is a viscose fiber containing silicic acid, and the heat-resistant fiber is a poly(paraphenylene terephthalamide fiber, and the viscose fiber (X) and heat resistant fiber (Y) are present in the fire-blocking fabric in a weight ratio expressed by the equation:

$$Y \geq -0.14X + 1.4 \; .$$

This invention is also related to a mattress resistant to an open flame comprising the fabric composite according to the present invention.

This invention is also related to a process for fire-blocking a mattress having, in order, ticking, cushioning material, and a mattress core, the process comprising incorporating into the mattress a fire-blocking fabric between the cushioning material and the mattress core; the fire-blocking fabric being a single layer of nonwoven fabric comprising least 17 grams per square meter (0.5 ounce per square yard) of a char-forming cellulose fiber containing inorganic compounds that retains at least 10 percent of its fiber weight when heated in air to 700 °C at a rate of 20 degrees C per minute and at least 17 grams per square meter (0.5 ounces per square yard) of a heat-resistant fiber selected from the group constisting of para-aramid, polybenzazole, polybenzimidazole, and polyimide.

## BRIEF DESCRIPTION OF THE DRAWINGS

Figure 1 illustrates, in a simplified manner, the fabric composite of this invention.

Figure 2 illustrates a range of compositions for the fire-blocking fabric used in this invention.

Figure 3 illustrates a preferred range of compositions for the fire-blocking fabric used in this invention.

Figure 4 illustrates a simplified cross section of the fire-blocked mattress of this invention.

Figure 5 illustrates a cut-away view of the fire-blocked mattress of this invention, showing in a simplified manner the fabric composite, cushioning foam, and mattress internals.

Figure 6 illustrates a simplified cross section of one possible embodiment of a fire-blocked foundation of this invention.

Figure 7 illustrates a simplified cross section of one possible embodiment of a fire-blocked foundation of this invention having a different fabric top face.

Figure 8 illustrates, in a simplified manner, the arrangement of burners, the mattress and foundation used to test the burn performance of a mattress and mattress set of this invention.

Figure 9 illustrates, in a simplified manner, the offset of the arrangement of burners used to burn the mattress and mattress set of this invention.

## DETAILS OF THE INVENTION

This invention is directed to fabric composite for use with mattresses. This fabric composite allows for various external surface affects to be created for the mattress, such as a quilted pillow surface or other soft, deformable surface, which insures the mattress of this invention has essentially the same feel to the touch as a mattress not containing a fire-blocking layer.

This invention is also directed to a fire-blocked mattress that incorporates the fabric composite. The fabric composite comprises, in order, outer fabric ticking, cushioning material, and fire-blocking fabric. The term sacrificial fabric as employed in conjunction with sacrificial outer ticking and sacrificial cushioning material denotes the ability of the fabric to burn when exposed to a flame. Although a fire-retardant chemical may be introduced in a sacrificial fabric, such incorporation is not necessary. The ticking and cushioning material become sacrificial layers if the mattress is burned. That is, they are allowed to burn when the mattress is exposed to a flame. The inventors of the present invention have found that such materials may be allowed to burn as long as the quantity of the available fuel contributed by the ticking and cushioning material is limited and the fire-blocking fabric is constructed of appropriate materials. The fire-blocking fabric performs certain functions when the mattress set is burned, including (1) protecting the mattress core along with any foams therein from the impinging flame and the burning batting and ticking, and (2) resisting the propagation of the flame along the surface of the mattress. The actual construction technique for the fabric composite is not critical as long as the materials are assembled in order with the ticking on the outside, the cushioning material in the center and then the fire-blocking fabric. Preferably, the fabric composite can be made in a separate step and then placed over and attached to the mattress core, however, it is also possible that the individual layers may be placed separately over the mattress core and assembled on the mattress core.

This invention is further directed to a mattress set resistant to an open flame comprising a mattress and a mattress foundation wherein the mattress includes the inventive fabric composite and a mattress core, the fabric composite comprising, in order, a sacrificial outer ticking, a sacrificial cushioning material, and a single layer nonwoven fire-blocking fabric. The mattress foundation can also include the fabric composite. The mattress set has a peak heat release rate of less than 150 kilowatts within the first 30 minutes of the test, and preferably less than 150 kilowatts within the first 60 minutes of the test, when tested according to Technical Bulletin 603 of the State of California. Additionally, the mattress set has a total heat release of less than 25 megajoules within 10 minutes when tested according to Technical Bulletin 603.

## Fabric Composite

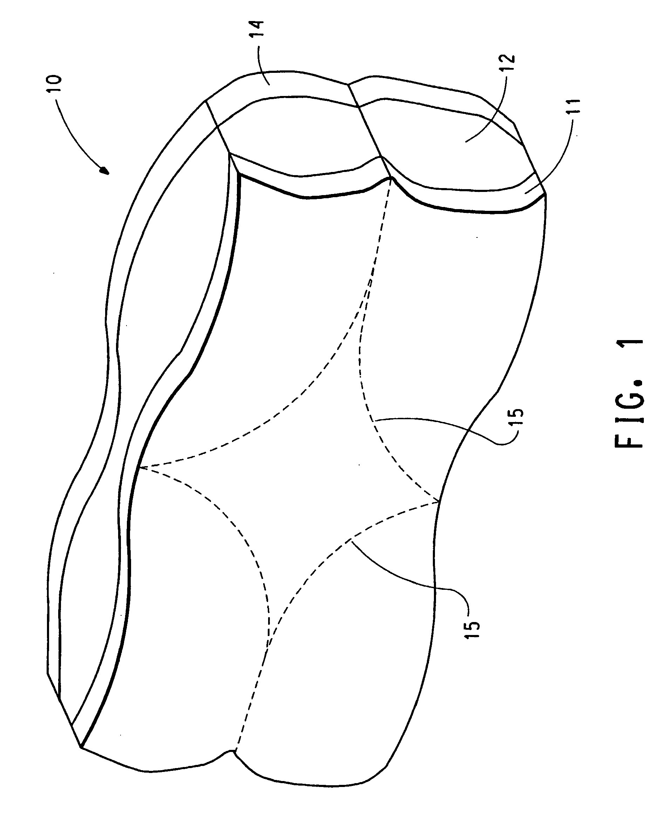

Figure 1 is a simplified representation of a cutout of the fabric composite of this invention with the individual parts not drawn to scale but expanded for clarity. Fabric composite **10** is shown with ticking **11** combined with cushioning material **12.** Adjacent to the cushioning material is fire-blocking fabric **14.** This figure illustrates a quilt-type pattern with stitches **15** forming a pillowed surface in the ticking and cushioning material.

## Sacrificial Ticking

The outer surface of the fabric composite **10** is covered by ticking **11.** Such fabrics are normally very durable woven or knit fabrics utilizing any number of weaves, and tend to have basis weights in the range of 68 to 271 grams per square meter 2 to 8 ounces per square yard). Typical ticking fabrics may contain but are not limited to cotton, polyester fibers, or rayon fibers. The ticking is normally stitched to the cushioning material and the fire-blocking fabric, making quilt-like areas to create pillow-like projections on the outer face of the fabric composite or mattress. In addition, the seams of ticking and/or the fabric composite at the edges of the mattress may be taped and sewn to provide addition seam strength at these areas. It is preferred that the sewing thread used to stitch the ticking at the seams and the material used in the edge tapes be made from a flame resistant material. The preferred flame resistant material for stitching is an aramid thread made from aramid fiber and the preferred aramid is poly(paraphenylene terephthalamide).

## Sacrificial Cushioning Material

The fabric composite **10** of this invention contains a cushioning material **12** to provide additional initial comfort. This cushioning material is in addition to any supporting foam in the mattress core. The cushioning material may include one or more light density fibrous batting or foams, or a combination thereof that provide the surface effect that is highly desired by the consumer. The batting and/or foams acts like a pillow underneath the ticking, providing very tactile cushioning, the type that can be readily discerned by simply touching or running one's hand across the mattress. While not intended to be limiting, if the cushioning material is a fibrous batting, such batting may include a vertically pleated structure as disclosed in, for example, in PCT Publication WO 2003049581 or a batting of fibers as disclosed for example in U.S. Patent No. 3,118,750.

The cushioning material adds potential fuel to the fabric composite and the maximum allowable basis weight of the cushioning material used in the fabric composite depends on a number of parameters. The heat of combustion of the cushioning material and the burn rate are the most critical of these parameters. For typical polyester (PET) batting widely used in the bedding industry, the heat of combustion is about 21.6 megajoules per kilogram (page V/113 "Handbook of Polymers" Fourth Edition, John Wiley & Sons, Inc. 1999). For a standard twin size mattress the top panel is about 2.6 square meters (2.4 square yards), and the total heat of combustion from a 305 grams per square meter (1 ounce per square foot) polyester batting on that top panel is about 13.25 megajoules. The burn pattern on the top panel typically radiates outward from the location of the burner at a rate at which the cushioning layer on the top panel is completely consumed within the first 30 minutes of the test. The above observations and facts lead to a simple model of heat release in which the heat release rate starts at approximately zero and increases linearly with time. Within these assumptions, the following table can be calculated.

**Table 1**
**Computed Heat Release for Polyester Batting in Mattresses**

| PET Basis weight g/m$^2$(oz/ft$^2$) | PHRR, kW | THR at 10 min, MJ | THR at 30 min, MJ |
|---|---|---|---|
| 305 (1) | 14.8 | 1.5 | 13.3 |
| 610 (2) | 29.5 | 2.9 | 29.5 |
| 1220 (4) | 59.0 | 5.9 | 53.0 |
| 1830 (6) | 88.5 | 8.8 | 88.5 |
| 3050 (10) | 147.6 | 14.7 | 132.5 |
| 3660 (12) | 177.1 | 17.7 | 159.1 |
| PHRR - Peak Heat Release Rate | | | |
| THR - Total Heat Release | | | |

Table 1 shows that, in the absence of all other sources of heat, the maximum allowable basis weight of a typical cushioning layer is around 339 g/m$^2$ (10 oz/yd$^2$). This corresponds to a total heat of combustion of 155 MJ/m$^2$ (130 MJ/yd$^2$). Above this value the peak heat release rate is predicted to exceed the 150 kW allowable maximum. Therefore, the total combined heat of combustion of the sacrificial cushioning layer and any ticking should not exceed about 155 MJ/m$^2$ (130 MJ/yd$^2$). While fiber batting has been used as an example, the same total combined heat of combustion would apply if the cushioning layer was foam or a combination of foam and fiber batting.

**Fire-Blocking Fabric**

The fire-blocking fabric positioned underneath the ticking and cushioning material is a single layer nonwoven fabric preferably comprised of at least 17 grams per square meter (0.5 ounces per square yard) of a cellulose fiber that retains at least 10 percent of its fiber weight when heated in air to 700°C at a rate of 20 degrees C per minute, and at least 17 grams per square meter (0.5 ounces per square yard) of heat resistant fiber. The nonwoven fire-blocking fabric used in this invention has a basis weight of at least (85 grams per square meter) 2.5 ounces per square yard. Single layer nonwoven fabrics having basis weights of less than that amount do not provide adequate fire-blocking performance. The maximum practical basis weight of the nonwoven fire-blocking fabric of this invention is in the range of 238 grams per square meter (7 ounces per square yard). Heavier weight fabrics still provide protection, however, with additional basis weight there is little improvement in fire retarding performance. Nonwoven fabrics having this composition and basis weight can be used as the sole fire-blocking component for a mattress or a mattress set comprising a mattress and foundation.

The nonwoven fire-blocking fabric can be made by conventional nonwoven sheet forming processes, including processes for making air-laid nonwovens or wet-laid nonwovens, and such formed sheets can be consolidated into fabrics via spunlacing, hydrolacing, needlepunching, or other processes which can generate a nonwoven sheet. The spunlaced processes disclosed in U.S. Pat. No. 3,508,308 and U.S. Pat. No. 3,797,074; and the needlepunching processes disclosed in U.S. Pat. No. 2,910,763 and U.S. Pat No. 3,684,284 are examples of methods well-known in the art that are useful in the manufacture of the nonwoven fabrics. The preferred nonwoven fabrics of this invention are air-laid spunlaced or hydrolaced nonwovens where high pressure water jets are used to entangle fibers into a cohesive sheet.

**Cellulose fiber**

Cellulose fiber to be used in this invention is a char-forming cellulose fiber containing inorganic compounds. By char-forming, it is meant the cellulose fiber retains at least 10 percent of its weight when heated in air to 700°C at a rate of 20 degrees C per minute. Such cellulose fibers preferably have 10 percent inorganic compounds incorporated into the fibers. Such fibers, and methods for making such fibers, are generally disclosed in U.S. Pat. No. 3,565,749 and British Pat. No. GB 1,064,271. A preferred char-forming cellulose fiber for this invention is a viscose fiber containing silicon dioxide in the form of a polysilicic acid with aluminum silicate sites. Such fibers, and methods for making such fibers are generally disclosed in U.S. Pat. Nos. 5,417,752 and PCT Pat. Appl. WO 9217629. Viscose fiber containing silicic acid and having approximately 31 (+/- 3) percent inorganic material is sold under the trademark Visil® by Sateri Oy Company of Finland. The char-forming fibers of this invention, when incorporated into the nonwoven fabric, provide adequate fire-blocking performance without the need for the fabric to be treated with additional flame-retardant additives or topically-applied flame retardant compounds.

**Heat Resistant Fiber**

The single layer nonwoven fabric contains a least 0.5 ounces per square yard (17 g per m$^2$) of a heat resistant fiber and the fiber is an organic fiber selected from the group of para-aramid, polybenzazole, polybenzimidazole, and polyimide. By "heat resistant" it is meant that the fiber preferably retains 90 percent of its fiber weight when heated in air to 500 C at a rate of 20 degrees C per minute. Such fibers are normally flame resistant, meaning the fiber or a fabric made from the fiber has a Limiting Oxygen Index (LOI) such that the fiber or fabric will not support a flame in air, the preferred LOI range being greater than 26. The preferred fibers do not excessively shrink when exposed to a flame, that is, the length of the fiber will not significantly shorten when exposed to flame. Fabrics containing 17 grams per square meter (0.5 ounces per square yard) of an organic fiber that retains 90 percent of its fiber weight when heated in air to 500°C at a rate of 20 degrees C per minute tend to have limited amount of cracks and openings when burned by an impinging flame.

Heat resistant and stable fibers useful in the nonwoven fire-blocking fabric of this invention are fibers made from para-aramid, polybenzazole, polybenzimidazole, and polyimide polymer. The preferred heat resistant fiber is made from para-aramid polymer.

As used herein, "aramid" is meant a polyamide wherein at least 85% of the amide (-CONH-) linkages are attached directly to two aromatic rings. Additives can be used with the aramid. In fact, it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid. In the practice of this invention, the preferred para-aramid is poly(paraphenylene terephthalamide). Methods for making para-aramid fibers useful in this invention are generally disclosed in, for example, U.S. Pat. Nos. 3,869,430; 3,869,429; and 3,767,756. Such aromatic polyamide organic fibers and various forms of these fibers are available from DuPont Company, Wilmington, Delaware under the trademark Kevlar® fibers.

Commercially available polybenzazole fibers useful in this invention include Zylon® PBO-AS (Poly(p-phenylene-2,6-benzobisoxazole) fiber, Zylon® PBO-HM (Poly(p-phenylene-2,6-benzobisoxazole)) fiber, available from Toyobo, Japan. Commercially available polybenzimidazole fibers useful in this invention include PBI® fiber available from Celanese Acetate LLC. Commercially available polyimide fibers useful in this invention include P-84® fiber available from LaPlace Chemical.

## Useful Combinations of Cellulose and Heat Resistant Fibers

One fire-blocking fabric useful in the fabric composite of this invention comprises at least 17 grams per square meter (0.5 ounces per square yard) of a viscose fiber containing silicic acid, and at least 17 grams per square meter (0.5 ounces per square yard) of a poly(paraphenylene terephthalamide) fiber; the viscose fiber (X) and poly(paraphenylene terephthalamide) fiber (Y) being present in a weight ratio expressed by the equation:

$$Y >/= -0.14X + 1.3$$

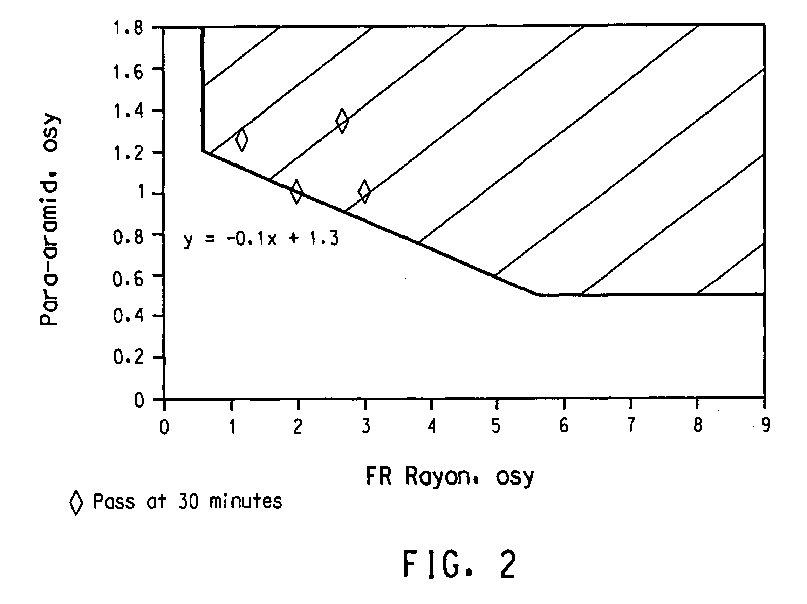

This area is represented by the area above the line in Figure 2. Nonwoven fabric having the composition and the basis weights shown by this area can be used as a single layer as the sole fire-blocking component in the fabric composite, mattress and mattress set of this invention. Mattress sets that contain the fabric composite having the fire-blocking fabric so defined will have, when burned according to the California method, a peak heat release of less than 150 kilowatts within 30 minutes. This eliminates the need for multiple layers of fire-blocking fabrics that could add unacceptable bulk and/or stiffness to the mattress.

A more preferred fire-blocking fabric useful in the fabric composite of this invention will have a composition expressed by the equation:

$$Y >/= -0.14X + 1.4$$

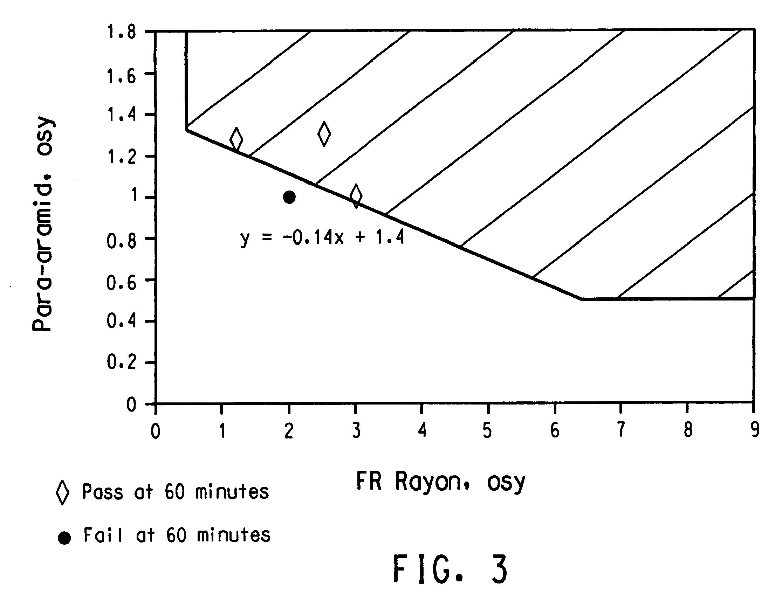

This area is represented by the area above the line in Figure 3. Mattress sets that contain the fabric composite having the fire-blocking fabric so defined will have, when burned according to the California method, a peak heat release of less than 150 kilowatts within 60 minutes.

The nonwoven fire-blocking fabric used in this invention can include, in addition, an off gassing material that releases a flame suppressing gas when burned. The preferred off gassing material are fibers made from halogen-containing polymers, such as modacrylic fiber or polyvinylchloride fibers. These polymers release chlorine-containing gases when burned. Up to 136 grams per square meter (4 ounces per square yard) of such materials can be added to the single layer nonwoven fabric. Useful modacrylic fibers include, but are not limited to, those disclosed in U.S. Pat. No. 5,506,042.

## Mattresses

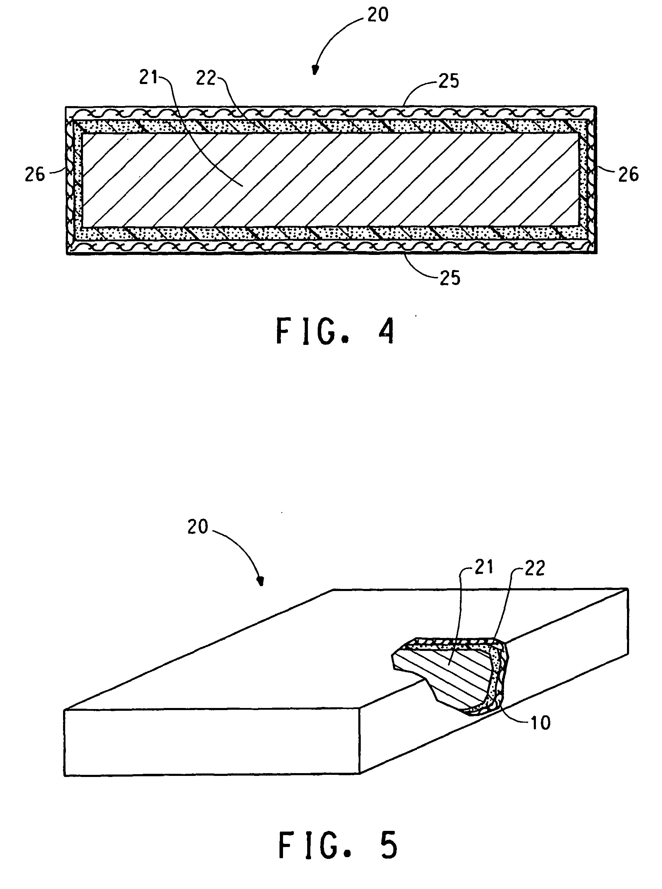

Figure 4 is a simplified representation of a mattress of this invention, not drawn to scale for clarity. A cross section of mattress **20** is shown having the complete periphery covered by fabric composite **10**. The top and bottom faces of the mattress, normally called the panels of the mattress, are designated by **25**. The sides of the mattress, normally called the borders of the mattress, are designated by **26**. Inside the fabric composite **10** is a layer of supporting foam **22,** and in this case the supporting foam completely encases the mattress internals **21**. Figure 5 shows a cut-away view of mattress **20** with the fire-blocking fabric composite **10,** supporting foam **22,** and mattress internals **21.**

For the purposes herein, the mattress core is meant to include any supporting foams **22** along with mattress internals **21**. The mattress internals are intended to include the mechanical structure of the mattress, such as supporting beams and springs and associated wrappings. Such internals can also include additional foam, or combinations of foams and battings. The mattress core may also be only foam or other support materials, such as an air or liquid bladder with or without supporting foam, in the place of springs and other mechanical means of support.

Supporting foam **22** as discussed herein is a part of the mattress core and includes foams used to provide most of the support comfort of the mattress. Normally such foams cover only the panels of the mattress internals, however, the mattress internals may be totally enclosed. Fire-blocking of the mattress is done in large part to prevent the supporting foam from being ignited, or if the foam is ignited, to help suppress spread of the flame in the supporting foam.

The fabric composite of the this invention is useful to fire-block the panels and/or the borders of the mattress, and different amounts of cushioning material may be used in the borders versus the panel of the mattress. To totally fire-block the mattress the fire-blocking should be incorporated into all panels and borders of the mattress. This allows the mattress to be turned by the owner so that both sides of the mattress can be used, without losing any of the fire-blocking qualities.

### Mattress Set

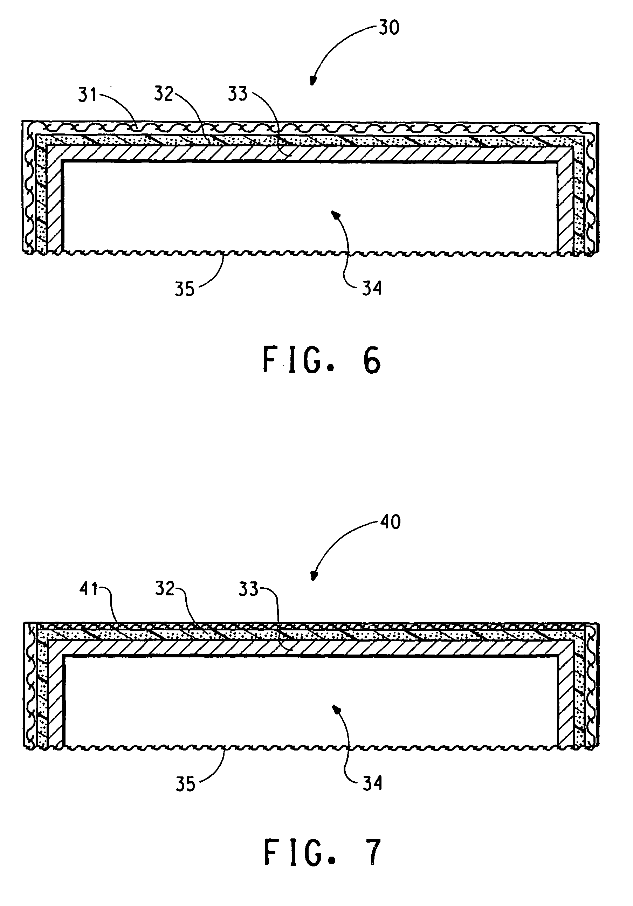

The fabric composite can also be used to fire-block a mattress set comprising a mattress and a mattress foundation. Foundations, such as box springs, are generally required to have fire-blocking on the borders or sides. The foundation top panel is normally in contact with the mattress and is somewhat shielded from flame so the material used in the foundation panel does not typically have to have the same degree of fire-blocking as say, the panel of the mattress. While not meant to be limiting, Figures 6 and 7 show a very simplified illustration of a type of foundation, a box spring, with two common types of fire-blocking arrangements. Referring to Figure 6, box spring foundation **30** is covered on the top panel and all borders with fabric composite **31.** Under the fabric composite is a layer of support foam **32.** The support foam is attached to a support structure **33** that is normally made from wood or some other rigid material. In some cases there is a large open area **34** in the foundation that is covered on the bottom by a thin nonwoven fabric dust cover **35.** An alternative arrangement is illustrated in Figure 7. Mattress foundation **40** is covered on the top panel with an alternative top fabric **41** that is different from the fabric composite **31.** This top fabric panel covers the top face while the fire-blocking is provided for all four borders to prevent the intrusion of the flame jet during the flammability testing. Because the top panel of the foundation is covered by the mattress, the top fabric panel need not be as flame retardant as the borders of the foundation. Further, the mattress foundation may not have a large degree of cushioning material in the border and/or the panel. It is sufficient to have a single layer fire-blocking fabric underneath the outer ticking in the mattress foundation border.

Mattress sets of this invention have a peak heat release of less than 150 Kilowatts within the first 30 minutes of the test, and preferably within the first 60 minutes of the test, when tested according to this Technical Bulletin. Additionally, mattresses of this invention may have a total heat release of less than 25 megajoules within 10 minutes when tested according to this technical bulletin.

### Process for Fire-Blockin4 Mattress

This invention is further directed to a process for fire-blocking a mattress by incorporating into the mattress a fire-blocking fabric between the cushioning material and the mattress core, the fire-blocking fabric being a single layer of nonwoven fabric comprising at leas 17 grams per square meter (0.5 ounces per square yard) of a cellulose fiber containing inorganic compounds that retains at least 10 percent of its fiber weight when heated in air to 700°C at a rate of 20 degrees C per minute and at least 17 grams per square meter (0.5 ounces per square yard) of a heat-resistant fiber selected from para-aramid, polybenzazole, polybenzimidazole and polyimide.

The fire-blocking fabric can be preferably incorporated into the mattress by first combining, in order, ticking fabric, cushioning material, and fire-blocking fabric into a fabric composite. The layers of the fabric composite can be stitched together and then the fabric composite can be used to cover the mattress core. The fabric composite can be attached to the mattress core by an appropriate means such as stitching. An alternate method of incorporating the fire-blocking fabric into the mattress is by placing individual layers of fire-blocking fabric, cushioning material, and ticking fabric on the mattress core and stitching the layers to the mattress core.

### TEST METHODS

### Mattress Burn Performance

The Bureau of Home Furnishings and Thermal Insulation of the Department of Consumer Affairs of the State of California (3485 Orange Grove Avenue, North Highlands, California 95660-5595, USA) published Technical Bulletin 603 "Requirements and Test Procedure for Resistance of a Residential Mattress/Box Spring Set to a Large Open-Flame" dated February 2003 to quantify the flammability performance of mattress sets. This protocol provides a means of determining the burning behavior of mattress/foundation sets by measuring specific fire test responses when the mattress plus foundation are exposed to a specified flaming ignition source under well-ventilated conditions. It is based on the National Institute of Standards and Technology Publication titled "Protocol of Testing Mattress/Foundation Sets Using a Pair of Gas Burners" dated February 2003.

Test data are obtained that describe the burning during and subsequent to the application of a specific pair of gas burners from the point of ignition until (1) all burning of the sleep set has stopped, (2) a period of one hour has elapsed, or (3) flashover of the test room appears inevitable. The rate of heat release from the burning test specimen (the energy generated by the fire) is measured by oxygen consumption calorimetry. A discussion of the principles, limitations, and requisite instrumentation are found in ASTM E 1590 "Standard Test Method of Fire Testing of Mattresses". Terminology associated with the testing is defined in ASTM E 176 "Standard Terminology of Fire Standards".

In general, the test protocal utilizes a pair of propane burners, designed to mimic the heat flux levels and durations imposed on a mattress and foundation by burning bedclothes. The burners impose differing fluxes for differing times on the mattress top and the side of the mattress/foundation. During and subsequent to this exposure, measurements are made of the time-dependent heat release rate from the test specimen.

The mattress/foundation is placed on top of a short bed frame that sits on a catch surface. During the testing, the smoke plume is caught by a hood that is instrumented to measure heat release rate. For practicality, twin-sized mattresses and foundations are tested. After ignition by the burners, the specimen is allowed to burn freely under well-ventilated conditions.

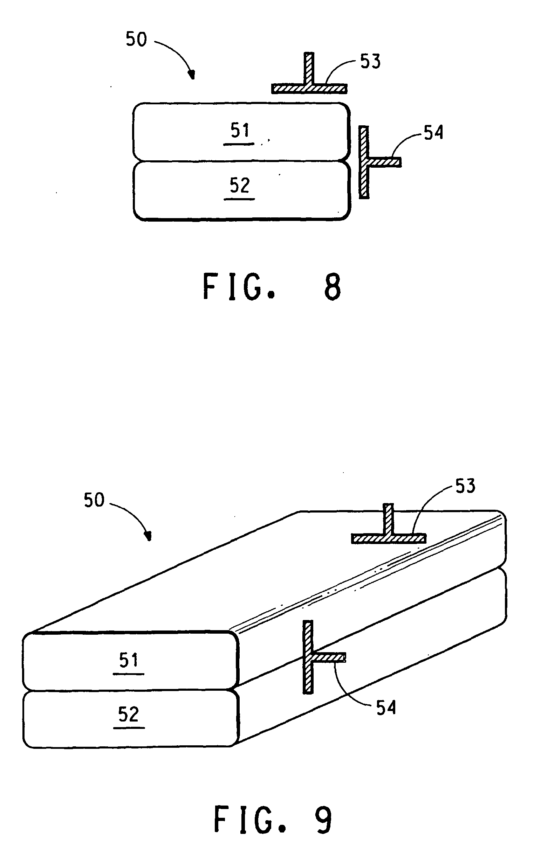

A representative illustration of the general locations of the gas burners, not drawn to scale, is shown in Figure 8. Test specimen **50** includes a mattress **51** is placed on foundation **52** with T-shaped burners **53** and **54** set to burn the specimen. Burner **53** impinges flames on the top surface of the mattress and is set 39 mm from the surface of the mattress. The second burner **54** impinges flames vertically on the side of the mattress/foundation combination and is set 42 mm from the side of the specimen. The side burner and the top burner are not set at the same place along the length of the specimen but are offset from on another along the length approximately 18 to 20 cm as generally illustrated in Figure 9. The burners are specially constructed and aligned per the test method.

The test specimen is conditioned for 24 hours prior to the testing at an ambient temperature of above 12 Celsius (54 Fahrenheit) and a relative humidity of less than 70 percent. The test specimen of mattress and foundation is centered on each other and the frame and catch surface. If the mattress is 1 to 2 cm narrower than the foundation the mattress may be shifted until the sides of the mattress and foundation are aligned vertically. The burners are aligned and spaced from the specimen per the standard. Data recording and logging devices are turned on at least one minute prior to ignition. The burners are ignited and the top burner is allowed to burn for 70 seconds while the side burner is allowed to burn for 50 seconds (if possible) and then they are removed from the area. Data collection continues until all signs of burning and smoldering have ceased or until one hour has elapsed.

**ThermoGravametric Analysis**

The fibers used in this invention retain a portion of their fiber weight when heated to high temperature at a specific heating rate. This fiber weight was measured using a Model 2950 Thermogravimetric Analyzer (TGA) available from TA Instruments (a division of Waters Corporation) of Newark, Delaware. The TGA gives a scan of sample weight loss versus increasing temperature. Using the TA Universal Analysis program, percent weight loss can be measured at any recorded temperature. The program profile consists of equilibrating the sample at 50°C; ramping the temperature at from 10 or 20 degrees C per minute from 50 to 1000 ° C; using air as the gas, supplied at 10 ml/minute; and using a 500 microliter ceramic cup (PN 952018.910) sample container.

The testing procedure is as follows. The TGA was programmed using the TGA screen on the TA Systems 2900 Controller. The sample ID was entered and the planned temperature ramp program of 20 degrees per minute selected. The empty sample cup was tared using the tare function of the instrument. The fiber sample was cut into approximately 0.16 cm (1/16") lengths and the sample pan was loosely filled with the sample. The sample weight should be in the range of 10 to 50 mg. The TGA has a balance, therefore the exact weight does not have to be determined beforehand. None of the sample should be outside the pan. The filled sample pan was loaded onto the balance wire making sure the thermocouple is close to the top edge of the pan but not touching it. The furnace is raised over the pan and the TGA is started. Once the program is complete, the TGA will automatically lower the furnace, remove the sample pan, and go into a cool down mode. The TA Systems 2900 Universal Analysis program is then used to analyze and produce the TGA scan for percent weight loss over the range of temperatures.

**Example 1**

Three sleep sets, each comprised of a mattress and foundation, were made using typical mattress and box spring construction techniques, each set only differing in the type and basis weight of fire-blocking fabric used. The mattress core was a standard steel coil construction covered with a fiber pad and a 1.25 centimeter (0.5 inch) foam sheet. The foundation was a standard steel coil and wood box construction. All mattresses were a tight (smooth) top style. Table 1 lists the composition and basis weight of the fire-blocking fabric used in the five mattresses.

**Table 1**

| Item No. | Composition | Basis weight (oz/yd$^2$) g/m$^2$ | PHRR <150 kW 30 min | PHRR <150 kW 60 min | THR <25 MJ 10 min |
|---|---|---|---|---|---|
| 1 | 50 % Kevlar®/ 50 % Visil® | 85 (2.5) | Pass | Pass | Pass |
| 2 | 33 % Kevlar® / 67 % Visil ® | 102 (3.0) | Pass | Fail | Pass |
| 3 | 25 % Kevlar® / 75 % Visil ® | 136 (4.0) | Pass | Pass | Pass |

PHRR - Peak Heat Release Rate
THR - Total Heat Release

Panel material for the mattresses was assembled by quilting together with standard polyester thread the following components in the order: 119 g/m$^2$ (3.5 oz/yd$^2$) woven polyester ticking fabric, approximately 1.9 cm (0.75") polyester batting having an areal density of 25 g/m$^2$ (0.75 oz/yd$^2$), a single layer fire-blocking fabric from Table 2, 2.54 cm (1") polyurethane foam sheet, 1.3cm (0.5") polyurethane foam sheet, and a nonwoven backing sheet of approximately 34g/m$^2$ (1 oz/yd$^2$). The panel material was used to cover both sides (top and bottom) of the two-sided mattresses.

Border material was assembled in a separate operation by quilting together with standard polyester thread the following components in the order: 119 g/m$^2$ (3.5 oz/yd$^2$) woven polyester ticking fabric, approximately 0.95 cm (0.375") polyurethane foam having an areal density of 2.5 oz/yd$^2$, the same fire-blocking fabric selected from Table 2 (same as used for the panel). The border material was used to cover all four vertical sides of the mattresses.

The border material was also used on the four vertical sides of the foundation employing a 5.1 centimeter (2 inch) continental or waterfall design on the upper edge of the foundation, a design in which the border material is folded over the upper edge and extends onto the foundation top panel.

The foundation top panel area within the continental edge was covered with a 136 g/m$^2$ (4 oz/yd$^2$) of spunlaced nonwoven fabric (having a composition of 25 %Kevlar® and 75 % Visil®) under a standard non-skid pad. All border and panel composite material seams were sewed with a thread containing Kevlar® fiber. FR-treated polyester seam tape was also used throughout.

The three sleep sets were individually burned according to Technical Bulletin 603 of the State of California. Burn results are summarized in Table 2. All had a Peak Heat Release Rate of less than 150 kilowatts in the first 30 minutes with a Total Heat Release of less than 25 megajoules in the first 10 minutes. Two of the mattresses also had a Peak Heat Release Rate of less than 150 kilowatts in the first 60 minutes.

**Example 2**

Two sleep sets, each comprised of a mattress and foundation, were made using the same techniques and materials as Example 1; however, a) the nonwoven fire-blocking fabric used in the mattress top panel and borders contained an off-gassing material that released a flame suppressing gas when burned and b) this nonwoven fire-blocking fabric was a single-layer needlepunched felt nonwoven fabric. The compositions and basis weights of these top panel fabrics are shown in Table 3. The bottom panels of the mattresses were made from the same material as the top panel of the foundation, that is the bottom panel was covered with 136 g/m$^2$ (4 oz/yd$^2$) of spunlaced nonwoven fabric (having a composition of 25% Kevlar® and 75% Visil®) under a standard non-skid pad.

Both sleep sets were burned as in Example 1 and both passed the Peak Heat Release Rate tests at both 30 and 60 minutes and the Total Heat Release test in the first 10 minutes.

**Table 2**

| Item No. | Composition | Basis weight. (oz/yd$^2$) g/m$^2$ | PHRR <150 kW 30 min | PHRR <150 kW 60 min | THR <25 MJ 10 min |
|---|---|---|---|---|---|
| 1 | 20 % Kevlar® / | 220 (6.5) | Pass | Pass | Pass |

(continued)

| Item No. | Composition | Basis weight. (oz/yd$^2$) g/m$^2$ | PHRR <150 kW 30 min | PHRR <150 kW 60 min | THR <25 MJ 10 min |
|---|---|---|---|---|---|
|  | 40 % Visil ® / 40 % Modacrylic |  |  |  |  |
| 2 | 20 % Kevlar® / 40 % Visil ® / 40 % Polyvinyl Chloride | 220 (6.5) | Pass | Pass | Pass |

PHRR - Peak Heat Release Rate
THR - Total Heat Release

## Claims

1. A fabric composite resistant to an open flame comprising in order:

   (a) sacrificial outer ticking
   (b) sacrificial cushioning material, and
   (c) fire-blocking fabric,

   the fire-blocking fabric being a single layer of nonwoven fabric comprising at least 17 grams per square meter (0.5 ounces per square yard) of a char-forming cellulose fiber containing inorganic compounds, and at least 17 grams per square meter (0.5 ounces per square yard) of a heat-resistant fiber selected from the group of para-aramid, polybenzazole, polybenzimidazole, and polyimide.

2. A fabric composite of claim 1 wherein the cellulose fiber is a viscose fiber containing silicic acid.

3. A fabric composite of claim 1 or 2 wherein the cellulose fiber is a viscose fiber containing silicon dioxide in the form of a polysilicic acid with aluminum silicate sites.

4. A mattress resistant to an open flame comprising the fabric composite of any of claims 1 to 3.

5. The mattress of claim 4 wherein the fabric composite is located in a panel of the mattress.

6. The mattress of claim 4 wherein the fabric composite is located in a border of the mattress.

7. The mattress of claim 4 wherein the heat resistant fiber is p-aramid.

8. A process for fire-blocking a mattress while retaining the aesthetics of the mattress cushioning material, the mattress having, in order, ticking, cushioning material and a mattress core, the process comprising incorporating into the mattress a fire-blocking fabric as recited in any of claims 1 to 3 between the cushioning material and the mattress core.

## Patentansprüche

1. Textilverbund, resistent gegenüber einer offenen Flamme und in der Reihenfolge aufweisend:

   (a) einen sich aufzehrenden äußeren Bezug
   (b) ein sich aufzehrendes Polstermaterial und
   (c) ein feuerblockierendes, textiles Flächengebilde,

   wobei das feuerblockierende, textile Flächengebilde eine einzelne Lage aus Vliesstoff ist, der mindestens 17 Gramm pro Quadratzentimeter (0,5 ounces per square yard) einer anorganische Verbindungen enthaltenden, karbonisierenden Cellulosefaser aufweist, sowie mindestens 17 Gramm pro Quadratzentimeter (0,5 ounces per square yard) einer hitzebeständigen Faser, ausgewählt aus der Gruppe, bestehend aus: Paraaramid, Polybenzazol, Polybenzimidazol und Polyimid.

2. Textilverbund nach Anspruch 1, wobei die Cellulosefaser eine Kieselsäure enthaltende Viskosefaser ist.

3. Textilverbund nach Anspruch 1 oder 2, wobei die Cellulosefaser eine Viskosefaser ist, die Siliciumdioxid in Form einer Polykieselsäure mit Aluminiumsilicat-Stellen enthält.

4. Matratze, gegenüber einer offenen Flamme resistent, welche den Textilverbund nach einem der Ansprüche 1 bis 3 aufweist.

5. Matratze nach Anspruch 4, wobei der Textilverbund in einer Stoffbahn der Matratze angeordnet ist.

6. Matratze nach Anspruch 4, wobei der Textilverbund in einer Einfassung der Matratze angeordnet ist.

7. Matratze nach Anspruch 4, wobei die hitzebeständige Faser aus p-Aramid ist.

8. Verfahren zum Feuerblockieren einer Matratze, während das ästhetische Aussehen des Polstermaterials der Matratze erhalten bleibt, wobei die Matratze in der Reihenfolge aufweist: Bezug, Polstermaterial und Matratzenkern, welches Verfahren den Einbau eines feuerblockierenden textilen Flächengebildes nach einem der Ansprüche 1 bis 3 in die Matratze zwischen dem Polstermaterial und dem Matratzenkern umfasst.

**Revendications**

1. Composite textile résistant à une flamme nue comprenant dans l'ordre :

   (a) une toile à matelas externe sacrificielle
   (b) un matériau sacrificiel de rembourrage, et
   (c) un textile pare-feu,

   le textile pare-feu étant une couche unique de textile non-tissé comprenant au moins 17 grammes par mètre carré (0,5 once par yard carré) d'une fibre en cellulose formant un résidu charbonneux contenant des composés inorganiques, et au moins 17 grammes par mètre carré (0,5 once par yard carré) d'une fibre résistante à la chaleur choisie parmi le groupe du para-aramide, polybenzazole, polybenzimidazole et du polyimide.

2. Composite textile selon la revendication 1, dans lequel la fibre de cellulose est une fibre en viscose contenant de l'acide silicique.

3. Composite textile selon la revendication 1 ou 2, dans lequel la fibre de cellulose est une fibre en viscose contenant du dioxyde de silicium sous la forme de poly(acide silicique) avec des sites de silicate d'aluminium.

4. Matelas résistant à une flamme nue comprenant le composite textile selon l'une quelconque des revendications 1 à 3.

5. Matelas selon la revendication 4, dans lequel le composite textile est situé dans un panneau du matelas.

6. Matelas selon la revendication 4, dans lequel le composite textile est situé dans une bordure du matelas.

7. Matelas selon la revendication 4, dans lequel la fibre résistante à la chaleur est du *p*-aramide.

8. Procédé servant de pare-feu à un matelas tout en conservant l'esthétique du matériau de rembourrage du matelas, le matelas ayant, dans l'ordre, une toile à matelas, un matériau de rembourrage et un noyau de matelas, le procédé comprenant l'incorporation dans le matelas d'un textile pare-feu tel qu'énoncé dans l'une quelconque des revendications 1 à 3 entre le matériau de rembourrage et le noyau de matelas.

FIG. 1

EP 1 648 693 B1

◊ Pass at 30 minutes

FIG. 2

EP 1 648 693 B1

**FIG. 3**

FR Rayon, osy

Para-aramid, osy

y = -0.14x + 1.4

◇ Pass at 60 minutes

● Fail at 60 minutes

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4750443 A, Blaustein
- US 6132476 A
- US 6547835 B
- US 5609950 A
- WO 2003049581 A
- US 3118750 A
- US 3508308 A
- US 3797074 A
- US 2910763 A
- US 3684284 A
- US 3565749 A
- GB 1064271 A
- US 5417752 A
- WO 9217629 A
- US 3869430 A
- US 3869429 A
- US 3767756 A
- US 5506042 A

**Non-patent literature cited in the description**

- Handbook of Polymers. John Wiley & Sons, Inc, 1999, V/113